# EUROPEAN PATENT SPECIFICATION

(11) **EP 2 780 265 B1**
(45) Date of publication and mention of the grant of the patent: **17.08.2016**
(21) Application number: 12850650.8
(22) Date of filing: 07.11.2012
(51) Int. Cl.: B65G 47/26, B27B 31/06, B65G 57/18, B65G 47/22, B65G 57/00

(54) **METHOD AND ARRANGEMENT FOR FORMING STACKS OF TIMBER, AND STACK OBTAINED THROUGH SAID METHOD**
VERFAHREN UND ANORDNUNG ZUR BILDUNG VON HOLZSTAPELN, UND EIN DURCH DIESES VERFAHREN ERZEUGTER STAPEL
MÉTHODE ET APPAREIL PERMETTANT DE FORMER DES PILES DE BOIS, ET PILE OBTENUE PAR CETTE MÉTHODE

(30) Priority: 15.11.2011 SE 1151087
(43) Date of publication of application: 24.09.2014
(73) Proprietor: Renholmen AB, 930 47 Byske (SE)
(72) Inventor: MARKLUND, Gunnar, S-930 47 Byske (SE); JOHANSSON, Jan, SE-907 42 UMEÄ (SE); JOHANSSON, Peter, S-931 46 Skellefteå (SE)
(74) Representative: Zacco Sweden AB
(86) International application number: PCT/SE2012/051207
(87) International publication number: WO 2013/074019

(56) References cited:
- EP-A2- 1 026 108
- EP-A2- 1 026 108
- FI-B- 53 956
- SE-C2- 533 674
- US-A- 4 663 860
- US-A1- 2008 283 362

## Description

The present invention concerns a method for forming stacks of timber according to the introduction to claim 1, and an apparatus for the execution of the method according to claim 6. The invention concerns also a stack of timber produced by the method, according to claim 9.

There is a significant need for the efficient handling and sorting of extended pieces of timber, such as planks in a sawmill, according to length and position in preparation for the formation of stacks. The pieces of timber must, before the formation of stacks, be sorted according to their various lengths, not only such that they are correctly placed for the insertion of laths, but also such that the stack of timber that is formed is correct. In the case of green timber, this is sorted and lathed, after which the timber is transported for drying in a timber dryer. In the case of dried timber, what are known as "bulk-stacked stacks" or stacks that contain binding laths are formed, in order to stabilise the stack during transport. The handling of the timber in preparation for the formation of stacks normally takes place through what is known as "end setting" or "end alignment" in an end-alignment transporter. In this case, the pieces of timber are transported divided into separate pieces (individual pieces) on a chain transporter provided with carriers essentially transverse to their longitudinal direction whereby individual pieces of timber are separated and displaced forwards through the influence of carriers. Through the influence of driven rollers at transverse roller conveyors that meet, every second piece of timber is displaced in its longitudinal direction to stop against a first or second contact located on opposite sides of the transport pathway. Due to the pieces of timber being held separately, i.e. individually, the tasks of orientation and sorting are made considerably easier. With the aid of this sorting technology, which is normally known as "double end alignment", what are known as "double-aligned stacks" are obtained, which stacks are characterised in that pieces of timber that lie next to each other in each layer are end-aligned towards different directions, as in a zig-zag pattern. The layers of timber are stacked one on top of each other with the intermediate placement of laths, in order to form a stack of timber with pre-determined dimensions with respect to length, breadth, and height. Such a stack is known from EP 1 026 108 A2, which discloses a method, an arrangement and stack according to the preambles of claims 1, 6 and 9, respectively.

One disadvantage with prior art arrangements for the formation of stacks is their limited capacity. In particular, the requirement for separation into individual pieces and the individual feed of pieces of timber, separated one by one during end alignment, constitutes a significant disadvantage for the total capacity of arrangements for the formation of stacks. The requirement for sorting one piece of timber to the right, one to the left, etc, during double-alignment is time-consuming and in itself leads to a limitation of the capacity of the stacker. Stacks of timber with the pieces of timber aligned in only one direction, known as "simple-aligned stacks", are known and, since the end alignment takes place in only a single direction, the problems of capacity can be overcome to a certain extent. This technique for the formation of stacks, however, suffers from the disadvantage that the stacks of timber formed are neither uniform nor correct.

In this respect, there is a desire to increase the total capacity of the arrangements for forming of stacks, in particular from the current value of approximately 200 units per minute to at least approximately 400 units per minute, or more. In other words, there is a need for technology that makes possible a doubling of the current capacity.

One purpose of the present invention, therefore, is to achieve a method that makes it possible to increase the total capacity of arrangements for forming stacks of the type described above, in particular through making an increase in the handling capacity of the end-alignment transporter of the stacker possible. A second purpose of the invention is to achieve an arrangement for forming stacks of timber for the execution of the method. The invention concerns also a stack of timber produced according to the method. These two purposes of the invention are achieved through a method and an arrangement that have been given the features and characteristics that are specified in claims 1 and 6, respectively. With respect to the final purpose of the invention, this is specified in claim 9.

The invention will be described below in more detail with reference to the attached drawings, of which:
Figure 1 shows a side view of an arrangement for the formation of stacks of timber according to the invention including a layer-formation transporter, an end-alignment transporter, and a layer-transfer arrangement for the transfer of formed layers to a stacking table that can be raised and lowered,
Figure 2 shows a side view of a part of a feed transporter that is a part of the arrangement located in a transition region between the layer-formation transporter and the end-alignment transporter,
Figure 3 shows a plan view corresponding to the transition region with the feed transporter that is shown in Figure 2,
Figure 4 shows a side view of a part of a return transporter that is a part of the arrangement located in a transition region between the end-alignment transporter and the layer-transfer arrangement,
Figure 5 shows a plan view corresponding to the transition region with the return transporter that is shown in Figure 4,
Figure 6 shows a side view of the layer-transfer arrangement for the transfer of formed layers to the stacking table that can be raised and lowered,
Figure 7 shows schematically a side view of a chain transporter that is a component of the end-alignment transporter of the arrangement,
Figure 8 shows a perspective view of a stack of timber produced according to the principles of the present invention.

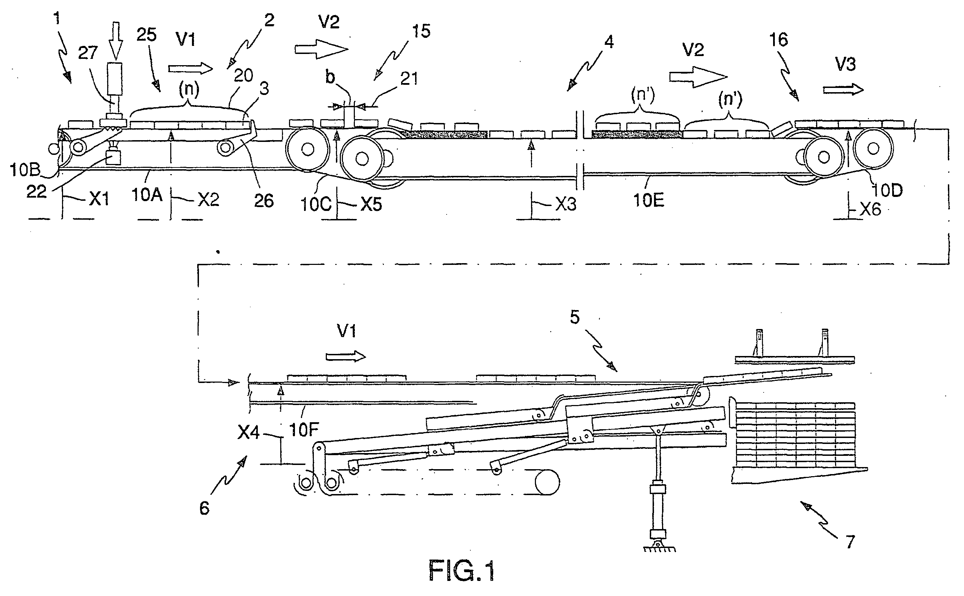

Figure 1 shows an arrangement for the formation of stacks of timber according to the present invention and through which the pieces of timber are transported in their transverse direction on an endless transport means in the form of chains or belts that extend parallel to each other.

Starting from the left in Figure 1, there is shown generally a part of an input transporter 1 and in association with this a layer-formation transporter 2, from which pieces of timber 3 that have been collected to form layers are transported forwards at a speed denoted by V1, an end-alignment transporter 4 on which the pieces of timber are transported in layers with a speed denoted by V2, a layer-transfer transporter 5 on which the layers of timber are transported with the speed V3 forwards to a layer-transfer arrangement 6 for transfer of the layers of timber to a stacking table 7 that can be raised and lowered. The transport means 10A of the layer-formation transporter 2 is displaced sideways relative to the transport means 10B of the input transporter 1, it extends in between this and is arranged with its transport plane X2, i.e. with the upper part of the belt, which supports the pieces of timber, at a somewhat lower level than the transport plane X1 of the input transporter, such that a distinct edge is present at the transition. It should furthermore be obvious that the transport plane of the end-alignment transporter 4, denoted by X3, is located at a level that is equal to, or somewhat lower than, the transport plane X2 of the layer-formation transporter 2 and the transport plane X4 of the layer-transfer transporter 6.

A feed transporter 15 is located in a transition region between the layer-formation transporter 2 and the end-alignment transporter 4, the speed of which is denoted V2 and is synchronised with the speed of the end-alignment transporter 4. A return transporter 16 is located in a transition region between the end-alignment transporter 4 and the layer-transfer arrangement 6, the speed of which, V3, can be regulated relative to the speeds of other transporters. The speed of the return transporter 16 is normally regulated such that a slit 21' with a desired width, denoted by b3, is obtained between neighbouring pieces of timber in the layer and as a consequence of this the resulting end-aligned layer that is to be stacked to a stack of timber is given a width corresponding to a pre-determined stack width B1.

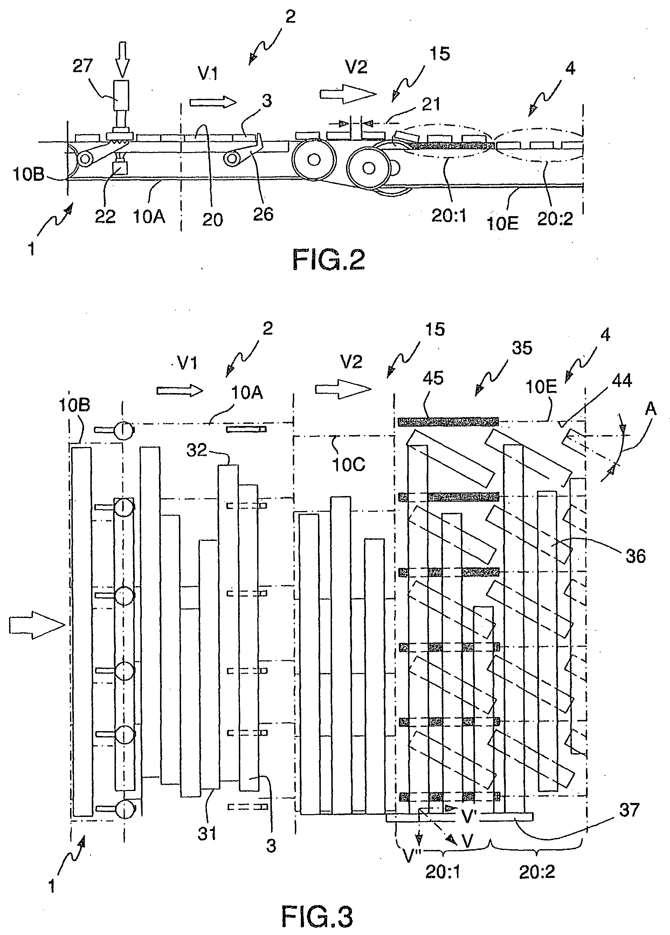

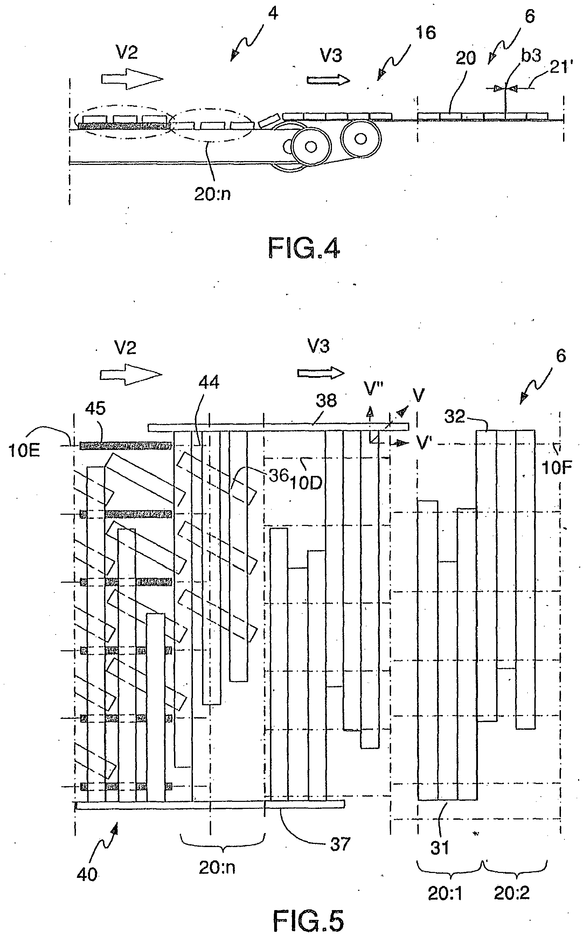

With reference to Figures 2 to 6, the feed transporter 15 and the return transporter 16 each comprises a series of endless transport means 10C and 10D, respectively, that are displaced sideways relative to the transport means 10A, 10B, 10F of neighbouring other transporters 2, 4, 5 such that it is possible for the transport means to run parallel and partially intermingled. The feed transporter 15 is arranged with its transport plane X5, i.e. with the upper part of the belt 10C that supports the pieces of timber, at a somewhat higher level than the transport plane X2 of the layer-formation transporter 2 such that a distinct edge is present in the transition, and the transport plane X3 of the end-alignment transporter 4 is located at a level that is equal to, or somewhat lower than, the transport plane X5 of the feed transporter 15. The return transporter 16 is arranged with its transport plane X6, i.e. the upper part 10D of the belt that supports the pieces of timber, at a level that is equal to, or somewhat higher, than the transport plane X3 of the end-alignment transporter 4. The fact that the transport means 10C and 10D of the feed transporter 15 and the return transporter 16, respectively, are displaced sideways relative to neighbouring other transport means means that these two transport means, with one operational part, can collect or deliver in an easy manner pieces of timber 3 from or to a forwards-positioned or backwards-positioned transport, seen in the direction of transport. By ensuring that the speed V2 of the feed transporter 15 is higher than the speed of the layers of timber 20 that leave the preceding layer-formation transporter 1, a slit 21 or a gap with a width b will be formed between two successive pieces of timber 3 in a layer of timber 20 that initially is contiguous. By varying the speed of the feed transporter 15 relative to the speed V1 of the preceding layer-formation transporter, it is possible to give the slit 21 formed in this way a desired width b, and thus that the distance between neighbouring pieces of timber 3 be changed. The operative part of the feed transporter 15 has for this reason been given the ability not only to accelerate a piece of timber 3 from an piece of timber 3 that lies immediately behind it in a layer 20 by lifting the piece of timber 3 from the layer-formation transporter 2 in order to create a slit 21 with a pre-determined width b between the pieces of timber in the layer, but also to deliver this layer to the subsequent end-alignment transporter 4 that works at a speed that has been synchronised with the feed transporter. In a corresponding manner, the return transporter 16 at the end of the end-alignment transporter 4 can, through working at a speed V3 that can be regulated and that is normally lower, automatically brake individual pieces of timber 3 that lie in front in the layer 20, such braking to being relative to a piece of timber that lies behind, through lifting individual pieces of timber to the layer-transfer transporter 4 in order to reduce in this way the slit 21 between neighbouring pieces of timber 3 such that the original contiguous layer of timber 20 is reformed before stacking and the formation of stacks commence. It should be realised that the terms "reformation" and "collection" of a layer do not necessary refer to the pieces of timber in the layer lying contiguous and in contact with each other. It should be realised that it may be desirable in certain cases to give the reformed layer a pre-determined width that corresponds to the desired width B1 of the layer in a stack of timber through regulation of the relative speed, d(V2-V3), i.e. the retardation between the end-alignment transporter 4 and the return transporter 16 such that gaps 21' with the desired width, denoted b3 in Figure 4, are obtained between neighbouring pieces of timber in the layer.

As is seen most clearly in Figures 2 and 3, a layer-output arrangement that has a buffer zone 25 is arranged in association with the layer-formation transporter 2, in which zone pieces of timber 3 that have arrived relatively irregularly can be stored temporarily, stopped against a stop arrangement 26. The said stop arrangement 26 is set into a raised stop position in the example shown. When a sufficient number of pieces of timber 3 to form a layer of timber 20 has been collected in the buffer zone 25 a signal is transmitted from a control unit, not described in detail here, to a layer-limitation arrangement 27, which lifts a subsequent piece of timber somewhat, while this piece of timber is at the same time held fast from above. Pieces of timber 3 that have been fed forward are thus collected as they arrive from the layer-limitation arrangement 27. The layer-output arrangement of the layer-formation transporter 2 is controlled with information about the pre-determined stack width B1 and thus the number of pieces of timber 3 in each layer 20. The reference number 3 in Figures 1 and 2 denotes the first piece of timber in the new layer 20 that has been formed. A width gauge 22 is positioned in association with the input transporter, which width gauge detects the width B2 of the first piece of timber in each layer and passes this information to a control unit. The control unit thus receives information about the speeds of the input transporter 1 and the layer-formation transporter 2, and about the width B2 of a first piece of timber 3 in each layer, whereby the control unit controls the drive arrangement of the layer-formation transporter 2 on the basis of this information such that the number (n) of pieces of timber that is required for the formation of the layer 20 becomes equal to the pre-determined stack width B1. The subsequent end-alignment transporter 4 comprises a position sensor. When a pre-determined position has been reached, a signal is given to the stop arrangement 26, which is lowered, on the condition that a layer 20 has been completed, whereby the layer of timber is fed forwards towards the feed transporter 15 onwards from this to the end-alignment transporter 4. When the complete layer has passed the stop arrangement, this is again raised. The tightly packed layer of timber continues out onto the feed transporter 15, which, through its higher speed V2, accelerates the individual pieces of timber 3 in the layer of timber 20 such that the pieces of timber become somewhat separated from each other during the formation of a layer of timber with a slit 21 between neighbouring pieces of timber, where the slit demonstrates a pre-determined width b. The separated pieces of timber 3 in the layer 20 are divided into (n) subsets (20:1-20:n) when they are placed down onto the subsequent end-alignment transporter 4. The number (n') of pieces of timber in each subset 20:1-20:n is determined in advance and is selected principally on the basis of the width B1 of the first piece of timber 3 in the layer and on the basis of the maximal stack width B1 of the stack of timber of stacked layers that is to be formed. Another way of saying this is that broader pieces of timber in the layer 20 lead to a lower number of pieces of timber 3 in each subset, and vice versa. The term "subset" is used below to denote an evenly distributed group of objects that have been separated from a number of objects in a certain larger collection, such as a layer of timber 20 with a total pre-determined width B1. It should be understood that in the case in which the pieces of timber 3 demonstrate a very large width B2, it is conceivable that each subset 20:1-20:n includes only a single (n') piece of timber. The number of pieces of timber (n') in each subset 20:1-20:n is thus determined using information about the width B2 of the first piece of timber (3) in each layer.

Figures 2 and 3 show the end-alignment transporter 3 that is a component of the present stacker arrangement in more detail, whereby 10F denotes one of a series of parallel chains that run with a speed denoted by V2. Reference numbers 31 and 32 denote a first and a second end surface, respectively, of the said piece of timber 3. Reference number 35 generally denotes a first end alignment arrangement in the form of a roller conveyor with rollers 36 that are driven and that are placed obliquely relative to the direction of transport, so arranged that all pieces of timber, on contact with the rollers, are displaced in the longitudinal direction such that they come into contact at their first end surface 31 with a first end stop 37, which first end stop constitutes what is normally known as the "base stop". With reference also to Figures 4 and 5, the reference number 40 generally denotes a second end-alignment arrangement that also in this case has a roller conveyor with rollers 36 that are driven and that are similarly placed obliquely to the direction of transport. These rollers 36, however, are driven in such a direction that all pieces of timber 3 are, on contact with the rollers, displaced in the longitudinal direction such that they come into contact at their second end surface 32 with a second end stop 38.

As is made clear by Figures 2, 6 and 7, alternating low and high timber-carrying sections 44, 45 are arranged on the chain transporter 10F of the end-alignment arrangement 4, whereby each such low 44 or high 45 section is intended to support one subset 20:1-20:n of the pieces of timber, respectively. A low timber-carrying section 44 is constituted by the trivial transport plane that the highest level of the upper edge of the transport chain 10F forms, while a section 45 that is raised by means of a spacer is intended to support one subset of a layer of pieces of timber on a transport plane that is located at a level somewhat above the highest level of the transport chain. The said raised section 45 has been given a load-bearing surface with a material 45' that increases friction somewhat in order to ensure that pieces of timber 3 that are supported on it remain in place. It is possible through the use of a suitable frequency to ensure that the layers 20 of pieces of timber 3 with pre-determined gaps 21, which are formed by the feed transporter 15 through its higher speed V2, are deposited in the form of subsets 20:1-20:n with a pre-determined number (n') of pieces of timber onto the alternating low and high timber-carrying sections 44, 45 of the chain transporter 10F.

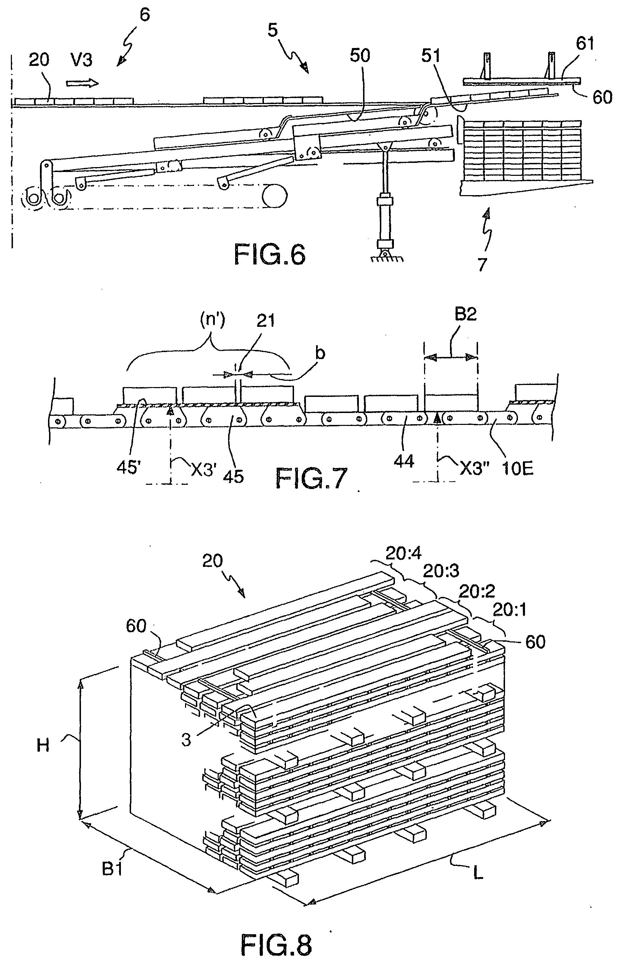

As is made most clear by Figure 7, the alternating high and low timber-carrying sections 44, 45 of the transport chain 10F ensure that each subset 20:1-20:n of the layer of timber of the pieces of timber 3 is displaced and end-aligned in a uniform manner within the subsets. In other words: the subsets 20:1-20:n are displaced uniformly in alternating directions as in a zig-zag pattern with in different directions (right and left). As is shown in Figure 7, a first subset 20:1 of pieces of timber 3 in a layer will, through the influence of the said elevations, rest on support surfaces 45 that are somewhat higher, while a second subset 20:2 of pieces of timber will rest on a lower support surface 44 (directly on the transport chain). Due to the fact that the subsets 20:1-20:n rest on support surfaces 44, 45 at different levels X3', X3", one subset at a higher level X3' will interact only with selected rollers 36 of the said end-alignment arrangement 35, 40. While every second timber-carrying section 44, 45 of the chain transporter 10F is elevated and located above a defined transport plane, it is ensured that all (n') pieces of timber 3 in a subset 20:1-20:n are oriented in a uniform manner through being displaced to end alignment against the first end stop 37, and that all pieces of timber in a neighbouring subset located at a lower timber-carrying section are displaced uniformly against the second end stop 38 such that the said subsets 20:1-20:n of the pieces of timber form a zig-zag pattern in each layer 20 of a stack of timber that has been stacked in this manner. As has been described above, the speed of the feed transporter 15 is controlled using information of the pre-determined stack width B1, the number (n) of pieces of timber 3 in each layer and thus how it is appropriate that these are distributed into suitable subsets 20:1-20:n of layers with adapted slits 21 between the pieces of timber in order for it to be possible for them to be successively deposited onto the alternating low and high timber-carrying sections 44, 45 of the end-alignment transporter 4. A control unit receives information of the relative speeds of the feed transporter 15 and the end-alignment transporter 4, and synchronises these such that the division of the contiguous layer 20 into subsets 20:1-20:n at the end-alignment transporter 4 can take place and such that the number (n') of pieces of timber in each subset 20:1-20:n required for the formation of the layer becomes equal to the pre-determined stack width B. This results in a stack of timber of the type that is shown in Figure 8 where the pieces of timber in each layer 20 are divided into subsets 20:1-20:n that are uniformly set in different directions. As has been described above, the rollers 36 are obliquely placed or oriented with an oblique angle denoted by A to the direction of transport. This angle A has been selected such that each piece of timber in a layer achieves a resulting speed forwards from the two components V2', V2" of speed that results in each piece of timber 3 in each subset 20:1-20:n being displaced not only forwards in the direction of transport but also sideways against the relevant stop contact 29, 10F. The speed component V2' in the direction of transport has been so selected relative to the speed V2 of the end-alignment transporter that an individual piece of timber 3 does not undergo any displacement relative to the end-alignment transporter 4 in the direction of transport, but remains instead in its position in the forwards direction of motion while the piece of timber is lifted from the rollers 36. The second speed component V2" ensures that each individual piece of timber in a sublayer 20:1-20:n is displaced along its longitudinal direction, i.e. in a sideways direction, transverse to the direction of transport against the relevant stop contact 29, 10F. The number of pieces of timber 3 in each subset 20:1-20:n is determined in advance, and is determined principally depending on the width B2 of the pieces of timber and the maximal width B1 of the stack of timber of stacked layers that is to be formed. In order to provide better understanding, it can be mentioned as an example that if pieces of timber with, for example, a width B2=75 mm are to be distributed for a maximal stack width B1 of 1,500 mm, it is appropriate that the pieces of timber are divided from an original contiguous layer 20 into six subsets 20:1-20:6 with three pieces of timber 3 in each subset such that they, together with a seventh subset 20:7 in the form or a residual set with only two pieces of timber 3, together will fill the pre-determined stack width B1.

The return transporter 16 that is located at the end of the end-alignment transporter 4 and that works at a speed V3 that is lower than the speed V2 of the end-alignment transporter 4 has the task of braking the individual pieces of timber 3 in the sublayers 20:1-20:n by lifting the pieces of timber, one by one, up to the layer-transfer transporter 6. Due to this braking or retardation in the speed V3, the slits 21 between neighbouring pieces of timber 3 become smaller such that the layer of timber 20 that was originally in the layer-formation transporter 2 is in this way reformed after the end-alignment stage. Alternatively, the speed V3 of the return transporter 16 relative to the speed V2 of the end-alignment transporter 4 is regulated such that a slit 21' between neighbouring pieces of timber 3 is formed during the transfer is so adapted that the width of the resulting reformed layer corresponds exactly to the pre-determined stack width B1. The layer-transfer transporter 6 with its transport plane X7, i.e. the upper part of the belt 10G that supports the pieces of timber, is arranged at essentially the same level as the transport plane X2 of the layer-formation transporter 2. The layer-transfer arrangement 5 with its two forks or fingers, 50 and 51, is designed to lift a reformed layer of timber 20 from the layer-transfer transporter 6 for lowering of the layer of timber onto deployed laths at a stack of timber that is being formed that is generally denoted by the reference number 55 and that is supported by the lift arrangement 7, including a table that can be raised and lowered. A position sensor senses when a layer of timber 20 is ready to be placed onto the stack whereby the removal mechanism of the layer-transfer arrangement is activated. The function of this layer-transfer arrangement 5, which has fingers 50, 51 arranged such that each one can be displaced along a guiderail that is arranged such that it can pivot, is well known and will not, therefore, be described in more detail. Laths 60 are placed between the layers of timber in the stack that is formed on the lift arrangement 7 by being placed on the uppermost layer of timber 20 in the lift arrangement by means of a lath-placement arrangement 61 before the removal fingers 50, 51 transfer a further layer of timber 20.

The present invention is not limited to what has been described above and shown in the drawings: it can be changed and modified in several different ways within the scope of the innovative concept defined by the attached patent claims.

## Claims

1. A method for forming double-aligned stacks of timber where the pieces of timber (3) are transported along a pathway perpendicular to their longitudinal direction on an endless transport means (10A, 10B, 10F) in the form of chains or belts, whereby in one of a number of steps that follow one after each other, the pieces of timber are end-aligned through being displaced in their longitudinal direction against end stops (37, 38), and which pieces of timber having been formed into a layer (20) with a width that corresponds to the pre-determined stack width (B1) are formed into a stack through the layers being stacked on each other, with, in some cases, the intermediate insertion of laths (60), wherein the method includes the following operational step:
- that in a first step pieces of timber (3) that have been fed forward are caused to form a contiguous layer (20) in which the number (n) of pieces of timber in the layer is controlled using information about the pre-determined stack width (B1), the method being **characterized in that** further includes the following steps:
- that in a second step the pieces of timber in the contiguous layer (20) are separated from each other through a slit (21) with a pre-determined width (b) being, formed between neighbouring pieces of timber in the layer (20),
- that in a third step the separated layer (20) is divided into a number (n) of pre-determined sublayers (20:1-20:n) where each such sublayer includes a pre-determined number (n') of pieces of timber,
- that in a fourth step the number (n') of pieces of timber that are in each sublayer (20:1-20:n) are end-aligned uniformly within the sublayer through being displaced in the same direction in their longitudinal direction against a first end stop (37) located on one side of the transport pathway,
- that in a fifth step the number (n') of pieces of timber that are in at least one of the sublayers (20:1-20:n) is end-aligned uniformly within the sublayer through being displaced in the same direction in its longitudinal direction against a second end stop (38) located on the opposite side of the pathway,
- that in a sixth step the relevant sublayers (20:1-20:n), each including a number (n') of pieces of timber (3), are brought together such that the pieces of timber return to form a contiguous layer (20),
- that in a seventh step layers (20) that have been reformed in this way and having contiguous pieces of timber are stacked on each other, with, in some cases, the intermediate insertion of laths (60), in order to form a stack of timber.

2. The method according to claim 1, whereby the number of pieces of timber (n') in each formed sublayer (20:1-20:n) in the third step is controlled using information about the width (B2) of a piece of timber (3) in each layer and the pre-determined stack width (B1).

3. The method according to any one of claims 1-2, whereby during the collection in the sixth step a slit (21') is formed between neighbouring pieces of timber (3) in the layer, where this slit is adapted in such a manner that the resulting reformed layer is given a width that corresponds to the pre-determined stack width (B1).

4. The method according to any one of claims 1-3, whereby the pieces of timber (3) in the layer (20) are separated from each other through each piece of timber in the layer being given a momentary increase in speed where a piece of timber (3) that lies in front is accelerated from a piece of timber in the layer that lies immediately behind.

5. The method according to any one of claims 1-4, whereby the groups of sublayers (20:1-20:n), each having a number (n') of pieces of timber (3), are brought together in the fifth step through being given a decrease in speed where a piece of timber (3) that lies in front is braked relative to a piece of timber that lies behind.

6. An arrangement for forming double-aligned stacks of timber from pieces of timber (3) comprising an input transporter (1) that feeds forwards pieces of timber perpendicular to their longitudinal direction, a layer-formation transporter (2) for the collection of the timber that has been fed forwards into a layer (20) or a group with a width that corresponds to a pre-determined stack width (B1), an end-alignment transporter (4) on which the pieces of timber are length-adjusted by being displaced in their longitudinal direction in contact with rotating rollers (36) against an end stop (37, 38), a transfer arrangement (5) for the transfer of layers (20) that have been formed to a stacking table (7) that can be raised and lowered and on which end-aligned layers are stacked on each other, with, in some cases, the intermediate insertion of laths (60), the input transporter (1) and the layer-formation transporter (2) being located in the direction of transport before the end-alignment transporter (4) and the layer-formation transporter working with a first pre-determined speed (V1), the arrangement being **characterized in that** it further comprises:
a feed transporter (15) that, working with a pre-determined second speed (V2) and installed before the end-alignment transporter (4), is arranged to accelerate each piece of timber (3) that has been fed forwards in a layer (20) such that a slit (21) or a gap with a pre-determined width (b) is formed between neighbouring pieces of timber (3) in the layer,
an end-alignment transporter (4) including an endless transport means (10E) with alternating low and high timber-carrying sections (44, 45) whereby the feed transporter (15) is arranged through interaction with the end-alignment transporter (4) to divide a layer (20) that has been formed by the layer-formation transporter (2) into a pre-determined number (n) of sublayers (20:1-20:n), each one of which includes pre-determined number (n') of pieces of timber (3),
a first and a second end stop (37, 38) through the influence of which the number (n') of pieces of timber that are components of each sublayer (20:1-20:n) is end-aligned uniformly through the sublayers being distributed to rest alternating on the low and high timber-carrying sections of the end-alignment transporter and where the pieces of timber that are components of each sublayer are adjusted in length through interaction with the first end stop (37) and the pieces of timber that are components of at least one of the sublayers (20:1-20:n) are adjusted in length through interaction with the second end stop (38),
a return transporter (16) which, installed after the end-alignment transporter (4), is arranged to brake each piece of timber (3) that lies forwards in the layer such that the layer (20) that has been divided returns to form a contiguous layer (20) that can be stacked by means of the transfer arrangement (5) in order to form part of a stack of timber.

7. The arrangement according to claim 6, whereby a transport plane (X3) of the end-alignment transporter (4) is located at a level that is equal to or lower than a transport plane (X5) of the feed transporter (15).

8. The arrangement according to any one of claims 6-7, whereby the end alignment arrangement (4) comprises roller conveyors (35, 40) with driven rollers (36) that are placed obliquely and at an oblique angle (A) to the direction of transport.

9. A stack of timber formed through a method of the type that is specified in claim 1, and demonstrating layers (20) of pieces of timber (3) stacked one on top of each other with intermediate laths (60), **characterized in that** the pieces of timber in each layer are uniformly set in different directions in pairs of two or more pieces of timber.

## Patentansprüche

1. Verfahren zum Bilden von beidseitig bündigen Holzstapeln, wobei die Holzstücke (3) entlang einer senkrecht zu ihrer Längsrichtung verlaufenden Bahn auf einem endlosen Transportmittel (10A, 10B, 10F) in Form von Ketten oder Bändern transportiert werden, wobei in einem aus einer Reihe von aufeinander folgenden Schritten die Holzstücke (37, 38) durch Versetzen in ihrer Längsrichtung gegen Endanschläge bündig gestoßen werden, wobei aus den Holzstücken, aus denen eine Lage (20) mit einer Breite, die einer vorgegebenen Stapelbreite (B1) entspricht, gebildet wurde, durch Aufeinanderstapeln von Lagen ein Stapel gebildet wird, in manchen Fällen mit dazwischen eingelegten Latten (60), wobei das Verfahren folgenden Arbeitsschritt umfasst:
- dass in einem ersten Schritt Holzstücke (3), die vorwärts befördert wurden, zum Formen einer zusammenhängenden Lage (20) gebracht werden, wobei die Anzahl (n) von Holzstücken in der Lage unter Verwendung von Informationen über die vorgegebene Stapelbreite (B1) gesteuert wird,
wobei das Verfahren **dadurch gekennzeichnet ist, dass** es weiterhin folgende Schritte beinhaltet:
- dass in einem zweiten Schritt die Holzstücke in der zusammenhängenden Lage (20) voneinander durch einen Schlitz (21) mit einer vorgegebenen Breite (b), der zwischen benachbarten Holzstücken in der Lage (20) gebildet wird, voneinander getrennt werden.
- dass in einem dritten Schritt die getrennte Lage (20) in eine Anzahl (n) von vorgegebenen Teillagen (20:1-20:n) unterteilt wird, wobei jede derartige Teillage eine vorgegebene Anzahl (n') von Holzstücken umfasst,
- dass in einem vierten Schritt die Anzahl (n') von Holzstücken in jeder Teillage (20:1-20:n) innerhalb der Teillage einheitlich bündig gestoßen werden, indem sie in derselben Richtung in ihrer Längsrichtung gegen einen ersten Endanschlag (37) verschoben werden, der an einer Seite der Transportbahn angeordnet ist,
- dass in einem fünften Schritt die Anzahl (n') von Holzstücken, die in mindestens einer der Teillagen (20:1-20:n) enthalten sind, innerhalb der Teillage einheitlich bündig gestoßen werden, indem sie in derselben Richtung in ihrer Längsrichtung gegen einen zweiten Endanschlag (38) verschoben werden, der an der gegenüberliegenden Seite der Transportbahn angeordnet ist,
- dass in einem sechsten Schritt die relevanten Teillagen (20:1-20:n), die jeweils eine Anzahl (n') von Holzstücken (3) beinhalten, so zusammengeführt werden, dass die Holzstücke wieder eine zusammenhängende Lage (20) bilden,
- dass in einem siebten Schritt Lagen (20), die auf diese Weise neu gebildet wurden und zusammenhängende Holzstücke aufweisen, zum Bilden eines Holzstapels aufeinander gestapelt werden, in manchen Fällen mit dazwischen eingelegten Latten (60).

2. Verfahren nach Anspruch 1, wobei die Anzahl der Holzstücke (n') in jeder im dritten Schritt gebildeten Teillage (20:1-20:n) mittels Informationen über die Breite (B2) eines Holzstücks (3) in jeder Lage sowie über die vorgegebene Stapelbreite (B1) gesteuert wird.

3. Verfahren nach einem der Ansprüche 1-2, wobei während des Zusammenführens im sechsten Schritt ein Schlitz (21') zwischen benachbarten Holzstücken (3) in der Lage gebildet wird, wobei dieser Schlitz so angepasst ist, dass die entstehende neu gebildete Lage eine Breite erhält, die der vorgegebenen Stapelbreite (B1) entspricht.

4. Verfahren nach einem der Ansprüche 1-3, wobei die Holzstücke (3) in der Lage (20) voneinander dadurch getrennt werden, dass jedes Holzstück in der Lage eine vorübergehende Geschwindigkeitssteigerung erfährt, wobei ein Holzstück (3), das vorne liegt, gegenüber einem Holzstück in der Lage, das unmittelbar dahinter liegt, beschleunigt wird.

5. Verfahren nach einem der Ansprüche 1-4, wobei die Gruppen von Teillagen (20:1-20:n), die jeweils eine Anzahl (n') von Holzstücken (3) aufweisen, im fünften Schritt zusammengeführt werden, indem sie eine Verringerung der Geschwindigkeit erfahren, wobei ein Holzstück (3), das vorne liegt, gegenüber einem Holzstück, das dahinter liegt, abgebremst wird.

6. Anordnung zum Aufbau von beidseitig bündigen Holzstapeln aus Holzstücken (3), umfassend eine Einfahrtransporteinheit (1), die Holzstücke senkrecht zu ihrer Längsrichtung vorwärts befördert, eine Lagenbildungstransporteinheit (2) zum Zusammenfassen des zu einer Lage (20) oder einer Gruppe mit einer vorgegebenen Stapelbreite (B1) entsprechenden Breite vorwärts transportierten Holzes, eine Bündigstoßtransporteinheit (4), auf der die Holzstücke durch Versetzen in ihrer Längsrichtung in Kontakt mit rotierenden Rollen (36) gegen einen Endanschlag (37, 38) in der Länge angepasst werden, eine Umsetzanordnung (5) zum Umsetzen der gebildeten Lagen (20) auf einen Stapeltisch (7), der angehoben und abgesenkt werden kann und auf dem bündig gestoßene Lagen aufeinander gestapelt werden, in manchen Fällen mit dazwischen eingelegten Latten (60), wobei die Einfahrtransporteinheit (1) und die Lagenbildungstransporteinheit (2) in Transportrichtung vor der Bündigstoßtransporteinheit (4) angeordnet sind und die Lagenbildungstransporteinheit mit einer ersten vorgegebenen Geschwindigkeit (V1) arbeitet,
wobei die Einheit **dadurch gekennzeichnet ist, dass** sie weiterhin Folgendes umfasst:
eine Vorschubtransporteinheit (15), die mit einer vorgegebenen zweiten Geschwindigkeit (V2) arbeitet und vor der Bündigstoßtransporteinheit (4) eingebaut und so angeordnet ist, dass sie jedes Holzstück (3), das in einer Lage (20) vorwärts transportiert wurde, so beschleunigt, dass ein Schlitz (21) oder ein Spalt mit einer vorgegebenen Breite (b) zwischen benachbarten Holzstücken (3) in der Lage entsteht,
eine Bündigstoßtransporteinheit (4), die eine Endlos-Transportvorrichtung (10E) mit abwechselnd niedrigen und hohen Holzauflageabschnitten (44, 45) umfasst, wobei die Vorschubtransporteinheit (15) durch Interaktion mit der Bündigstoßtransporteinheit (4) dazu angeordnet ist, eine Lage (20), die durch die Lagenbildungstransporteinheit (2) gebildet wurde, in eine vorgegebene Anzahl (n) von Teillagen (20:1-20:n) zu teilen, von denen jede eine vorgegebene Anzahl (n') von Holzstücken (3) umfasst,
einen ersten und einen zweiten Endanschlag (37, 38), durch dessen Wirkung die Anzahl (n') von Holzstücken, die Komponenten von jeder Teillage (20:1-20:n) sind, dadurch einheitlich bündig gestoßen werden, dass die Teillagen so verteilt werden, dass sie abwechselnd auf den niedrigen und hohen Holzauflageabschnitten der Bündigstoßtransporteinheit aufliegen, und wobei die Holzstücke, die Komponenten von jeder Teillage sind, durch Interaktion mit dem ersten Endanschlag (37) in der Länge angepasst werden, und die Holzstücke, die Komponenten von mindestens einer der Teillagen (20:1-20:n) sind, durch Interaktion mit dem zweiten Endanschlag (38) in der Länge angepasst werden,
eine Rückführtransporteinheit (16), die nach der Bündigstroßtransporteinheit (4) eingebaut und so angeordnet ist, dass sie jedes Holzstück (3), das in der Lage vorne liegt, abbremst, so dass die Lage (20), die geteilt wurde, wieder in Form einer zusammenhängenden Lage (20) gebracht wird, die mittels der Umsetzanordnung (5) gestapelt werden kann, um Bestandteil eines Holzstapels zu bilden.

7. Anordnung nach Anspruch 6, wobei eine Transportebene (X3) der Bündigstoßtransporteinheit (4) in einer Ebene angeordnet ist, die in Bezug auf eine Transportebene (X5) der Vorschubtransporteinheit (15) auf gleichem oder niedrigerem Niveau liegt.

8. Anordnung nach einem der Ansprüche 6-7, wobei die Bündigstoßanordnung (4) Rollenförderer (35, 40) mit angetriebenen Rollen (36) umfasst, die schräg und in einem schrägen Winkel (A) zur Transportrichtung angeordnet sind.

9. Holzstapel, der nach einem Verfahren des in Anspruch 1 spezifizierten Typs aufgebaut wurde und Lagen (20) von Holzstücken (3) aufweist, die mit dazwischenliegenden Latten (60) aufeinander gestapelt wurden, **dadurch gekennzeichnet, dass** die Holzstücke in jeder Lage gleichmäßig in verschiedenen Richtungen in Paaren von zwei oder mehr Holzstücken angeordnet sind.

## Revendications

1. Méthode permettant de former des piles de bois à double alignement où les pièces de bois (3) sont transportées le long d'une voie perpendiculaire à leur direction longitudinale sur un moyen de transport sans fin (10A, 10B, 10F) sous la forme de chaînes ou de bandes, selon lequel, dans une étape parmi un certain nombre d'étapes qui se suivent l'une après l'autre, les pièces de bois sont alignées bout à bout en étant déplacées dans leur direction longitudinale contre des butées d'arrêt (37, 38), et lesquelles pièces de bois ayant été formées en une couche (20) avec une largeur qui correspond à la largeur prédéterminée de pile (B1) sont formées en une pile en empilant les couches les unes sur les autres, avec, dans certains cas, l'insertion intermédiaire de lattes (60), où la méthode comprend l'étape opérationnelle suivante :
- **caractérisée en ce que**, dans une première étape, des pièces de bois (3) qui ont été avancées sont amenées à former une couche contiguë (20) dans laquelle le nombre (n) de pièces de bois dans la couche est commandé en utilisant des informations concernant la largeur prédéterminée de pile (B1), la méthode étant **caractérisée en ce qu'**elle comprend en outre les étapes suivantes :
- **en ce que**, dans une deuxième étape, les pièces de bois dans la couche contiguë (20) sont séparées les unes des autres par le biais de la formation d'une fente (21) avec une largeur prédéterminée (b) entre des pièces de bois voisines dans la couche (20),
- **en ce que**, dans une troisième étape, la couche séparée (20) est divisée en un certain nombre (n) de sous-couches prédéterminées (20:1 à 20:n) où chaque sous-couche de ce type comprend un nombre prédéterminé (n') de pièces de bois,
- **en ce que** dans une quatrième étape, le nombre (n') de pièces de bois qui est contenu dans chaque sous-couche (20:1 à 20:n) est aligné bout à bout uniformément au sein de la sous-couche en étant déplacé dans la même direction dans leur direction longitudinale contre une première butée d'arrêt (37) située sur un côté de la voie de transport,
- **en ce que**, dans une cinquième étape, le nombre (n') de pièces de bois est contenu dans au moins une des sous-couches (20:1 à 20:n) est aligné bout à bout uniformément au sein de la sous-couche en étant déplacé dans la même direction dans sa direction longitudinale contre une seconde butée d'extrémité (38) située sur le côté opposé de la voie,
- **en ce que**, dans une sixième étape, les sous-couches adéquates (20:1 à 20:n), comprenant chacune un certain nombre (n') de pièces de bois (3), sont réunies de telle sorte que les pièces de bois reprennent la forme d'une couche contiguë (20),
- **en ce que**, dans une septième étape, les couches (20) qui ont été reformées de cette façon et comportant des pièces de bois contiguës sont empilées les unes sur les autres, avec, dans certains cas, l'insertion intermédiaire de lattes (60), afin de former une pile de bois.

2. Méthode selon la revendication 1, selon laquelle le nombre de pièces de bois (n') dans chaque sous-couche formée (20:1-20:n) dans la troisième étape est commandé en utilisant des informations concernant la largeur (B2) d'une pièce de bois (3) dans chaque couche et la largeur prédéterminée de pile (B1).

3. Méthode selon l'une quelconque des revendications 1 à 2, selon laquelle, pendant le recueil dans la sixième étape, une fente (21') est formée entre des pièces de bois voisines (3) dans la couche, où cette fente est conçue d'une manière telle qu'on donne à la couche reformée résultante une largeur qui correspond à la largeur prédéterminée de pile (B1).

4. Méthode selon l'une quelconque des revendications 1 à 3, selon laquelle les pièces de bois (3) dans la couche (20) sont séparées les unes des autres en donnant à chaque pièce de bois dans la couche une augmentation momentanée de vitesse où une pièce de bois (3) qui se trouve à l'avant est accélérée par rapport à une pièce de bois dans la couche qui se trouve immédiatement derrière.

5. Méthode selon l'une quelconque des revendications 1 à 4, selon laquelle les groupes de sous-couches (20:1 à 20:n), comportant chacun un certain nombre (n') de pièces de bois (3), sont réunis dans la cinquième étape en leur donnant une diminution de vitesse où une pièce de bois (3) qui se trouve à l'avant est freinée par rapport à une pièce de bois qui se trouve derrière.

6. Appareil permettant former des piles de bois à double alignement à partir de pièces de bois (3), comprenant un transporteur d'entrée (1) qui fait avancer des pièces de bois perpendiculairement à leur direction longitudinale, un transporteur de formation de couche (2) pour le recueil du bois qui a été avancé en une couche (20) ou un groupe avec une largeur qui correspond à une largeur prédéterminée de pile (B1), un transporteur d'alignement bout à bout (4) sur lequel les pièces de bois sont ajustées en longueur en étant déplacées dans leur direction longitudinale en contact avec des rouleaux rotatifs (36) contre une butée d'arrêt (37, 38), un dispositif de transfert (5) pour le transfert des couches (20) qui ont été formées vers une table d'empilement (7) qui peut être levée et abaissée et sur laquelle les couches alignées bout à bout sont empilées les unes sur les autres, avec, dans certains cas, l'insertion intermédiaire de lattes (60), le transporteur d'entrée (1) et le transporteur de formation de couche (2) étant situés dans la direction de transport avant le transporteur d'alignement en bout (4) et le transporteur de formation de couche opérant à une première vitesse prédéterminée (V1),
l'appareil étant **caractérisé en ce qu'**il comprend en outre :
un transporteur d'alimentation (15) qui, opérant avec une seconde vitesse prédéterminée (V2) et installé avant le transporteur d'alignement en bout (4),
est disposé pour accélérer chaque pièce de bois (3) qui a été avancée dans une couche (20) de telle sorte qu'une fente (21) ou un écartement avec une largeur prédéterminée (b) est formé entre les pièces de bois voisines (3) dans la couche,
un transporteur d'alignement bout à bout (4) comprenant un moyen de transport sans fin (10E) avec des sections de transport de bois basses et hautes (44, 45) en alternance, selon lequel le transporteur d'alimentation (15) est disposé par le biais d'une interaction avec le transporteur d'alignement bout à bout (4) pour diviser une couche (20) qui a été formée par le transporteur de formation de couche (2) en un nombre prédéterminé (n) de sous-couches (20:1 à 20:n), dont chacune comprend un nombre prédéterminé (n') de pièces de bois (3),
des première et seconde butées d'arrêt (37, 38) sous l'influence desquelles le nombre (n') de pièces de bois qui représente les composants de chaque sous-couche (20:1 à 20:n) est aligné bout à bout uniformément en répartissant les sous-couches pour qu'elles reposent en alternance sur les sections de transport de bois basses et hautes du transporteur d'alignement bout à bout et où les pièces de bois qui sont les composants de chaque sous-couche sont ajustées en longueur par le biais d'une interaction avec la première butée d'arrêt (37) et les pièces de bois qui sont les composants d'au moins une des sous-couches (20:1 à 20:n) sont ajustées en longueur par le biais d'une interaction avec la seconde butée d'arrêt (38),
un transporteur de retour (16) qui, installé après le transporteur d'alignement bout à bout (4), est disposé pour freiner chaque pièce de bois (3) qui se trouve à l'avant dans la couche de telle sorte que la couche (20) qui a été divisée revient pour former une couche contiguë (20) qui peut être empilée au moyen du dispositif de transfert (5) afin de faire partie d'une pile de bois.

7. Appareil selon la revendication 6, selon lequel un plan de transport (X3) du transporteur d'alignement bout à bout (4) est situé à un niveau qui est égal ou inférieur à un plan de transport (X5) du transporteur d'alimentation (15).

8. Appareil selon l'une quelconque des revendications 6 à 7, selon lequel le dispositif d'alignement bout à bout (4) comprend des transporteurs à rouleaux (35, 40) avec des rouleaux entraînés (36) qui sont placés en oblique et selon un angle oblique (A) par rapport à la direction de transport.

9. Pile de bois formée par une méthode du type qui est spécifié dans la revendication 1, et présentant des couches (20) de pièces de bois (3) empilées les unes au-dessus des autres avec des lattes intermédiaires (60), **caractérisée en ce que** les pièces de bois dans chaque couche sont uniformément placées dans différentes directions par paires de deux pièces de bois ou plus.
